# EUROPÄISCHE PATENTSCHRIFT

(11) **EP 2 894 272 B1**
(45) Veröffentlichungstag und Bekanntmachung des Hinweises auf die Patenterteilung: **19.04.2023**
(21) Anmeldenummer: 15000058.6
(22) Anmeldetag: 13.01.2015
(51) Int. Cl.: E04C 5/07, E04C 3/294, E04B 5/43, E04B 5/29, E04C 3/04

(54) **Hochleistungsbewehrter Beton**
High performance concrete
Béton armé haute performance

(30) Priorität: 13.01.2014 DE 102014000316
(43) Veröffentlichungstag der Anmeldung: 15.07.2015
(60) Teilanmeldung: 17180724.1
(73) Patentinhaber: GOLDBECK GmbH, 33649 Bielefeld (DE)
(72) Erfinder: Heppes, Oliver, 33334 Gütersloh (DE)
(74) Vertreter: Cohausz & Florack

(56) Entgegenhaltungen:
- EP-A2- 1 227 198
- WO-A1-2006/138224
- DE-A1- 19 954 337
- DE-U1-202007 005 523
- US-A1- 2002 062 619
- US-A1- 2011 219 554

## Beschreibung

Die Erfindung befasst sich mit einem flächigen Betonfertigteil mit den Merkmalen des Oberbegriffs des Anspruchs 1.

Eine Bewehrung wird grundsätzlich in schlaffe Bewehrung und vorgespannte Bewehrung unterteilt. Aus dem Stand der Technik ist bekannt, Betonteile auf den Baustellen überwiegend schlaff zu bewehren. Dabei werden Bewehrungsstahlmatten schlaff in der Schalung verlegt. Erst nach dem Ausschalen, wenn die Bauteile Lasten abtragen können, nimmt der Beton die Druckkräfte und die Bewehrung die Zugkräfte auf. Ferner sind Betonfertigteile bekannt, die Bewehrungsstahlmatten aufweisen. Metallische Bewehrungen haben den Nachteil, dass sie stark korrosionsanfällig sind. Ferner findet sogenannter Textilbeton im Bauwesen immer mehr Einzug. Bisher kommen vor allem Anwendungen durch Sanieren von Bauwerken oder nachträgliches Verstärken zum Einsatz. Dabei liegt die Bewehrung außen und wird mit Mörtel überzogen. Der Mörtel weist nach DIN ein Größtkorn von maximal 4,0 mm auf. Beim Einsatz von Textilbeton in Neubauten kommen engmaschige Netze zum Einsatz, die ebenfalls in Mörtel mit einem Größtkorn von maximal 4,0 mm gebettet sind.

Die DE 199 54 337 offenbart ein Betonfertigteil mit einer Textilbewehrung, die unter anderem als beschichtetes E-Glas, das üblicher Weise zur besseren Wärmeisolierung eingesetzt wird, ausgebildet ist.

Aus der WO 2006/138224 A1 ist ein Betonfertigteil umfassend eine Textilbewehrung aus Carbonfasern bekannt, wobei die Carbonfasern eine Beschichtung aus Epoxidharz aufweisen können. Das Dokument WO 2006/138224 A1 offenbart ein Betonfertigteil nach der Präambel von Anspruch 1.

Aufgabe der vorliegenden Erfindung ist es, ein hochleistungsbewehrtes Betonfertigteil bereitzustellen, das leichter herzustellen ist.

Diese Aufgabe wird gelöst durch ein flächiges Betonfertigteil gemäß Anspruch 1.

Weitere vorteilhafte Ausgestaltungen der vorliegenden Erfindung sind in den abhängigen Ansprüchen angegeben.

Gemäß einem Aspekt der Erfindung ist ein flächiges Betonfertigteil, gemäß Anspruch 1, vorgesehen, umfassend mindestens eine Textilbewehrung, wobei die Textilbewehrung eine erste Anzahl von Fasern aufweist, die in eine Richtung orientiert sind und eine zweite Anzahl von Fasern aufweist, die in eine zweite Richtung orientiert sind, wobei das Größtkorn des Betons des Betonfertigteils eine Größe von mindestens 8,0 mm aufweist, wobei die Textilbewehrung im zugbeanspruchten Bereich des Betonfertigteils geführt ist, wobei die Textilbewehrung die auf das Betonfertigteil einwirkenden Zugkräfte vollständig abträgt, wobei die Textilbewehrung Carbonfasern aufweist und wobei die Fasern eine Beschichtung aufweisen.

Vorzugsweise ersetzt die Textilbewehrung die aus dem Stand der Technik bekannten Stahlmatten. Damit kann auf die herkömmliche Stahlmatte gänzlich verzichtet werden. Die Textilbewehrung ist dazu eingerichtet, die auf das Betonfertigteil einwirkenden Zugkräfte vollständig abzutragen. Besonders bevorzugt werden die einwirkenden Zugkräfte ausschließlich von der Textilbewehrung abgetragen. Damit ist die Textilbewehrung als eine statische Bewehrung zu verstehen.

Durch das Vorsehen eines textilbewehrten Betonfertigteils mit einem Größtkorn von mindestens 8,0 mm wird ein Betonfertigteil bereitgestellt, das leicht herzustellen ist. Durch das Einlegen der Textilbewehrung haben die Expositionsklassen XC, XD und XS im Vergleich zum heutigen Stand der Technik keinen Einfluss mehr auf die Bewehrung, da die Textilbewehrung nicht korrodieren kann.

Bevorzugt ist das Betonfertigteil ein Bauteil aus Beton mit einer Textilbewehrung, das in einem Werk industriell vorgefertigt wird und nachträglich, oft mit einem Kran, in seine endgültige Lage versetzt wird. Besonders bevorzugt kommen die Betonfertigteile in verschiedensten Bauarten (wie bspw. dem Gewerbe- und Industriebau, Wohnungsbau, Tiefbau, Straßenbau, Brückenbau und Tunnelbau) zum Einsatz. Die einzelnen Betonfertigteile werden in der Regel auf der Baustelle kraftschlüssig miteinander verbunden.

Beton ist ein Baustoff, erzeugt durch Mischen von Zement, grober und feiner Gesteinskörnung und Wasser, mit oder ohne Zugabe von Zusatzmitteln und Zusatzstoffen. Er erhält seine Eigenschaften durch Hydratation des Zements. Der Beton ist ein Beton nach DIN EN 206.

Das Betonfertigteil ist ein flächiges Betonfertigteil. Flächige oder flächenartige Fertigteile sind neben Deckenbetonfertigteilen vorzugsweise auch Wandbetonfertigteile. Bevorzugt wird unter einem flächigen oder flächenartigen Bauteil ein sich über eine bestimmte Fläche annähernd eben ausbreitendes Bauteil verstanden. Vorzugsweise ist das Deckenbetonfertigteil als Deckenplatte ausgebildet. Durch das Vorsehen eines textilbewehrten Betonfertigteils mit einem Größtkorn von mindestens 8,0 mm lassen sich Betonfertigteile herstellen, die im Vergleich zu ihrer Länge und/oder Breite relativ flach ausbildbar sind. Außerdem sind hohe Beanspruchungen aufgrund des Größtkorns von mindestens 8,0 mm vom Betonfertigteil aufnehmbar.

Insbesondere übernimmt die Textilbewehrung statisch relevante Beanspruchungen, wie Zug, Druck oder Querkräfte. Bevorzugt übernimmt die Textilbewehrung auch Beanspruchungen, die sich aus der Gebrauchstauglichkeit ableiten lassen, wie bspw. Risse und/oder Verformungen des Betonfertigteils.

Bevorzugt weist der Beton des Betonfertigteils bei einer maximalen Korngröße von 16,0 mm
- eine Korngröße von größer 8,0 bis 16,0 mm im Bereich von ca. 12% bis 40% der Gesamtkornzusammensetzung auf.

Besonders bevorzugt weist der Beton des Betonfertigteils bei einer maximalen Korngröße von 32,0 mm
- eine Korngröße von größer 8,0 bis 16,0 mm im Bereich von ca. 12% bis 24% der Gesamtkornzusammensetzung auf und
- eine Korngröße von größer 16,0 bis 32,0 mm im Bereich von ca. 11% bis 38% der Gesamtkornzusammensetzung auf.

Bevorzugt ist die Bewehrung (Armierung) die Verstärkung eines Objekts durch ein anderes, das eine höhere Druck- und / oder Zugfestigkeit beziehungsweise eine größere Haltbarkeit gegenüber weiteren Einflüssen der Umwelt (Wasser, Frost, chemische Stoffe etc.) besitzt.

Bevorzugt ist die Textilbewehrung derart im Betonfertigteil einbetoniert, dass sie annähernd parallel zur Grund- und/oder Deckfläche des Fertigbetonteils verläuft. Erfindungsgemäß ist die Textilbewehrung eine nichtmetallische Bewehrung. Bevorzugt liegt die Textilbewehrung vollständig im Fertigbetonteil.

Besonders bevorzugt ragen Teile der Textilbewehrung aus dem Fertigbetonteil heraus. Hierdurch ist eine Befestigung an weiteren Bauteilen, insbesondere an Verbundmitteln möglich.

Erfindungsgemäß wird die Bewehrung im zugbeanspruchten Bereich eines Betonfertigteils geführt.

Vorzugsweise ist die Textilbewehrung eine Textilstruktur, insbesondere eine 2D-oder 3D-Struktur. Bevorzugt ist die Textilbewehrung als 2D- oder 3D-Textilmatte ausgebildet. Besonders bevorzugt weist die Textilbewehrung eine Maschenstruktur auf.

Erfindungsgemäß weist die Textilbewehrung Carbonfasern auf.

Erfindungsgemäß besteht die Textilbewehrung aus Fasern oder Faserbündeln.

Erfindungsgemäß weisen die Fasern oder Faserbündel eine Beschichtung auf, wobei die Beschichtung ein Epoxidharz ist.

Ein Garn oder sog. Roving setzt sich aus einzelnen Carbonfaserfilamenten zusammen. Bevorzugt ist ein Garn ein Sammelbegriff für alle linienförmigen (eindimensionalen) textilen Gebilde.

Bevorzugt sind die Carbonfasern industriell hergestellte Fasern aus kohlenstoffhaltigen Ausgangsmaterialien, die durch Pyrolyse in graphitartig angeordneten Kohlenstoff umgewandelt werden. Bevorzugt werden anisotrope Fasern verwendet, da sie eine hohe Festigkeiten und Steifigkeiten bei gleichzeitig geringer Bruchdehnung aufweisen.

Bei einer Mischung von Carbonfasern und Glasfasern im Verhältnis 4:1 konnte in Versuchen eine verbesserte Zugkraftaufnahme der Textilbewehrung festgestellt werden, im Vergleich zu Carbonfasern.

Bei einer Mischung von Carbonfasern und Basaltfasern im Verhältnis 5:1 konnte in Versuchen ebenfalls eine verbesserte Zugkraftaufnahme der Textilbewehrung festgestellt werden, im Vergleich zu Carbonfasern.

Unter Naturfasern werden alle Fasern verstanden, die von natürlichen Quellen wie Pflanzen, Tieren oder Mineralien stammen und sich ohne weitere chemische Umwandlungsreaktionen direkt einsetzen lassen. Sie sind damit abzugrenzen von künstlich erzeugten Fasern, die synthetisch hergestellt werden. Bevorzugt sind Naturfasern organischen (pflanzlich oder tierisch) oder anorganischen Ursprungs (mineralisch).

Bei einer Mischung von Naturfasern mit Carbonfasern lassen sich die Kosten bei der Herstellung von Faserbündeln optimieren.

In einer weiteren bevorzugten Ausführungsform sind die Fasern der Textilbewehrung verwoben.

Bevorzugt sind die Fasern der Textilbewehrung in einer Leinwandbindung, Körperbindung oder Atlasbindung verwoben, gelegt oder verwirkt. Hierbei entsteht eine Bindung, ein Gelege oder eine Wirkware.

Bevorzugt geht der Schuss bei der Leinwandbindung abwechselnd über und unter den einzelnen Kettfäden hindurch. Beide Seiten eines in Leinwandbindung gewebten Stoffes sehen gleich aus.

Bevorzugt geht der Schuss bei der Köperbindung unter einem Kettfaden hindurch, danach über (mindestens) zwei Kettfäden hinweg, wieder unter einem hindurch, und so weiter. Der nächste Schussfaden verlagert diesen Rhythmus um eins zur Seite (i.d.R. nach rechts) und eins nach oben. Es entsteht ein typisches Diagonalmuster, welches man Köpergrat oder Diagonalgrat nennt. Die beiden Seiten eines in Köperbindung gewebten Stoffes sehen unterschiedlich aus. Die Seite, auf der mehr Kettfäden zu sehen sind, sind Kettköper, die andere entsprechend Schussköper.

Bevorzugt führt der Schuss bei der Atlasbindung unter einem Kettfaden hindurch, danach über mehr als zwei Kettfäden hinweg, und so weiter. Der nächste Schussfaden verlagert dies um mindestens zwei Kettfäden (i.d.R. nach rechts) und auch nach oben (i.d.R. um eins). Auf diese Weise entsteht ein Gewebe, auf dem auf der Oberseite die parallelen Schussfäden bei weitem überwiegen, was dem Stoff einen vom Lichteinfall abhängigen Glanz verleiht. Der Stoff ist zweiseitig, auf der Rückseite überwiegen entsprechend die Kettfäden. Vorzugsweise sind die Fäden Fasern oder Faserbündel.

Bevorzugt ist ein Gelege ein Flächengebilde, das aus einer oder mehreren Lagen von parallel verlaufenden, gestreckten Fäden besteht. An den Kreuzungspunkten werden die Fäden üblicherweise fixiert. Die Fixierung erfolgt entweder durch Stoffschluss oder mechanisch durch Reibung und/oder Formschluss. Vorzugsweise werden folgende Arten von Fadengelegen verwendet:
- monoaxiale oder unidirektionale, die durch das Fixieren einer Schar von parallelen Fäden entstehen,
- biaxiale, bei denen zwei Scharen von parallelen Fäden in Richtung von zwei Achsen fixiert werden und
- multiaxiale, bei denen mehrere Scharen aus parallelen Fäden in Richtung verschiedener Achsen fixiert werden.

Vorzugsweise ist die Wirkware eine Kulierwirkware oder eine Kettenwirkware.

Bevorzugt wird die Kulierwirkware wird als Rund- oder Flachwirkware (also als Schlauch oder Meterware) hergestellt. Es wird nur mit einem Faden gestrickt. Dieser verläuft quer und wird von vielen Nadeln gleichzeitig erfasst und durch die vorhergehende Maschenreihe gezogen. Hierdurch entsteht eine neue Masche. Der Herstellungsprozess ist ähnlich dem des maschinellen Strickens, wobei beim Kulierwirken alle "Stricknadeln" gleichzeitig bewegt werden. Ein Vorteil des Kulierwirkens sind die günstigeren Herstellungskosten.

Bevorzugt wird Kettenwirkware mit vielen Fäden, entsprechend der Anzahl der Maschen, die die Wirkware am Ende haben soll, und mindestens ebenso vielen Nadeln hergestellt. Beim Kettenwirken laufen die Fäden vertikal und werden von den Nadeln ergriffen und durch die vorhergehende Maschenreihe gezogen. Damit sich eine Fläche ergibt und nicht einzelne Maschenbänder, greifen die Nadeln nicht nur denselben Faden, sondern abwechselnd auch benachbarte Fäden. Bevorzugt sind verschiedene Bindungen vorgesehen, bei denen auch zum Beispiel ein Faden übersprungen werden kann. Ein Vorteil der Kettenwirkware gegenüber der Kulierwirkware ist die größere Haltbarkeit, da durch die mehrfachen Fäden kaum Maschen "laufen" können. Vorzugsweise sind die Fäden Fasern oder Faserbündel.

Die Textilbewehrung weist eine erste Anzahl von Fasern auf, die in eine Richtung orientiert sind und weist eine zweite Anzahl von Fasern auf, die in eine zweite Richtung orientiert sind.

Die erste Anzahl von Fasern sind Längsfasern und die zweite Anzahl von Fasern sind Querfasern, wobei die Längsfasern zu den Querfasern in einer Draufsicht auf die Textilbewehrung orthogonal verlaufen.

Dabei sind die Querfasern annähernd rechtwinkelig zu den Längsfasern angeordnet. Bevorzugt bilden mindestens vier Fasern der Textilbewehrung eine Masche, wobei der maximale lichte Abstand zwischen zwei benachbarten Fasern mindestens 2 bis 5 mal größer als das Größtkorn des Betonfertigteils ist Damit kann das Größtkorn des Betons gut innnerhalb den Maschen der Textilbewehrung eingebracht werden.

Vorzugsweise sind die Maschen quadratisch oder rechteckig ausgebildet. Quadratisch oder rechteckig ausgebildeten Maschen weisen zwei zueinander parallel verlaufende Längsfasern auf, die sich mit zwei Querfasern, die parallel zueinander verlaufen, kreuzen.

Bevorzugt ist der maximale lichte Abstand zwischen zwei benachbarten Fasern mindestens 3 mal größer als das Größtkorn des Betonfertigteils.

Bei einem maximalen lichten Abstand von etwa 25,5 mm und einer Korngröße des Betons von 8,0 mm, bevorzugt im Bereich von 8,0 mm bis 16,0 mm, können sich die Größtkörner besonders gut in die Maschen der Textilbewehrung einlagern. Damit ist eine nahezu homogene Verteilung der Größtkörner im Betonfertigteil möglich, wobei ein Entmischen des Betons vermieden wird.

Vorzugsweise sind die Längs- und die Querfasern an ihren Kreuzungspunkten miteinander verbunden.

Bevorzugt sind die sich kreuzenden Längsfasern und Querfasern an ihren Kreuzungspunkten miteinander fixiert.

Besonders bevorzugt wird die Faserreihe mit der Faserfolge an den Kreuzungspunkten miteinander verschweißt, verknotet oder verharzt. Bevorzugt erfolgt ein Verschweißen, ein Verknoten oder ein Verharzen thermisch unter Wärmeeinwirkung.

Vorzugsweise weist die Textilbewehrung Verknotungen einer Längsfaser mit einer Querfaser auf. Die Verknotung gewährt eine stabile Netzstruktur.

Bevorzugt bilden die Längsfasern und die Querfasern eine netzähnliche Textilbewehrung aus.

Die Textilbewehrung weist zusätzliche Fasern auf, die ausgehend von einer Krafteinwirkung auf das Betonfertigteil entsprechend orientiert sind.

Dabei sind die zusätzlichen Fasern schräg verlaufende Fasern, wobei die schräg verlaufenden Fasern einen Winkel gegenüber den Längsfasern und den Querfasern aufweisen.

Auf diese Weise lässt sich eine verbesserte Zugkraftaufnahme der Textilbewehrung erreichen.

Bevorzugt bilden mindestens drei Fasern, nämlich eine Längsfaser, eine Querfaser und eine schräge Faser, eine Masche der Textilbewehrung, wobei der lichte Abstand zwischen zwei benachbarten Fasern mindestens 2 bis 5 mal größer als das Größtkorn des Betonfertigteils ist.

Vorzugsweise sind die Maschen dreieckig ausgebildet. Damit kann das

Größtkorn des Betons gut innerhalb der Maschen der Textilbewehrung eingebracht werden.

Das Vorsehen schräger Fasern erlaubt eine gezielte Verstärkung der Textilbewehrung.

Bevorzugt sind die zusätzlich schräg verlaufende Fasern, an ihren Kreuzungspunkten durch Verweben, thermische Verschweißung, mittels Verknotung oder anderer Verbindungsmöglichkeiten mit den Längs- und Querfasern verbunden.

In einer weiteren besonders bevorzugten Ausführungsform sind in die Textilbewehrung Strukturen eingewebt oder gelegt.

Die eingewebten Strukturen sind bevorzugt zusätzliche Fasern, die eine engere Maschenweite verursachen, wie bspw. horizontal, vertikal, schräg oder diagonal verlaufende Fasern. Die Strukturen sind besonders bevorzugt Fasern, deren Bewehrungsquerschnitt vergrößert ist.

Auf diese Weise lässt sich ein Textilbewehrung schaffen, die einlagig ausgebildet ist und die größere Kräfte infolge einer Krafteinwirkung von außen auf das Betonfertigteil aufnehmen kann.

Besonders bevorzugt varriiert die Maschenweite in Längs- und/oder in Querrichtung, je nachdem, wie hoch die Beanspruchung der Textilbewehrung ist.

In einer weiteren, nicht gemäß der Erfindung, Ausführungsform werden mehrere Textilbewehrungslagen übereinander im Fertigbetonbauteil angeordnet.

Bei einem maximalen lichten Bewehrungsabstand von etwa 25,5 mm und einer Korngröße des Betons von 8,0 mm, bevorzugt im Bereich von 8,0 mm bis 16,0 mm, können sich die Größtkörner besonders gut in die Maschen der Textilbewehrung einlagern. Damit ist eine nahezu homogene Verteilung der Größtkörner im Betonfertigteil möglich, wobei ein Entmischen des Betons vermieden wird.

In einer weiteren bevorzugten Ausführungsform der Erfindung ist vorgesehen, die Textilbewehrung nur Abschnittsweise in dem Betonfertigteil zu verlegen. Damit kann eine Materialeinsparung erfolgen, da nur dort die Textilbewehrung eingebracht wird, wo sie tatsächlich benötigt wird.

Bevorzugt liegt das Verhältnis der Faserdicke (Garn) zur Bauteildicke des Fertigbetonbauteils im Bereich von 1:50 bis 1:20.

In einer weiteren bevorzugten Ausführungsform der Erfindung betragen die Querschittsflächen der Fasern maximal 5,0 % von der Querschnittsfläche des Fertigbetonbauteils. Bevorzugt betragen die Querschittsflächen der Fasern 1,5 % bis 4,5 %, besonders bevorzugt 3,0 % von der Querschnittsfläche des Fertigbetonbauteils.

Bevorzugt weisen die Fasern eine Querschnittsfläche von 1,5 bis 20 mm² auf, das entspricht einem äquivalenten Durchmesser von ca. 0,75 bis 2,50 mm.

Vorzugsweise weisen die Fasern ein Gewicht/m im Bereich von 0,25 Gramm bis 2,5 Gramm auf.

In einer weiteren bevorzugten Ausführungsform der Erfindung weist die Textilbewehrung ein Gewicht/m² im Bereich von 20 Gramm bis 750 Gramm auf, bei einer durchschnittlichen Faseranzahl im Bereich zwischen 80 bis 1875 Fasern/m².

Besonders bevorzugt weisen die Fasern eine mittlere bis sehr hohe Oberflächenrauigkeit nach EN ISO 25178 auf. Die Rauheit ist ein Begriff aus der Oberflächenphysik, der die Unebenheit der Oberflächenhöhe bezeichnet. In Versuchen hat sich herausgestellt, je rauer die Oberfläche der Fasern ist, desto besser ist die Verbindung zwischen der Textilbewehrung und dem Beton.

In einer weiteren besonders bevorzugten Ausführungsform wird die Textilbewehrung variabel zwischen einer oberen Betondeckung und einer unteren Betondeckung des Betonfertigteils im Betonfertigteil verlegt.

Bevorzugt ist die Textilbewehrung eine flexibe Bewehrung. Besonders bevorzugt ist die Textilbewehrung sehr leicht, verdrehbar, biegsam und entsprechend formbar aber dennoch hochfest. Damit ist ein variables Verlegen im Betonfertigteil möglich. Ferner können die Betonfertigteile sehr dünn ausgeführt werden.

Besonders bevorzugt ist die Textilbewehrung entsprechend der Zugbeanspruchung, die auf dasBetonfertigteil einwirkt, im Betonfertigteil verlegt. Hierdurch ergibt sich eine Vielzahl unterschiedlicher Arten, die Textilbewehrung im Betonfertigteil zu positionieren und zu verlegen.

Bevorzugt ist die Textilbewehrung im Bereich zwischen dem unteren Zehntel und dem oberen Zehntel der Höhe des Betonfertigteils angeordenet.

Bevorzugt ist das Deckenbetonfertigteil als Rechteckplatte ausgestaltet. Das Deckenbetonfertigteil ist bei polygonal verlaufendem Grundriss vorzugsweise trapezförmig ausgestaltet.

Gemäß einem weiteren Aspekt ist ein Verbundbauteil vorgesehen, aufweisend
- flächige Betonfertigteile, insbesondere Deckenbetonfertigteile, mit einer Textilbewehrung und
- insbesondere einen Stahlträger mit Verbundmitteln, wobei die Textilbewehrung eingerichtet ist, die Verbundmittel zu umgreifen und das Verbundbauteil durch Kraftschluss mittels Fugenverguss sicherzustellen.

Der kraftschlüssige Verbund wird vorzugsweise über Beton bzw. Mörtel (im Verguss) sichergestellt. Dabei entsteht eine kraftschlüssige, insbesondere schubfeste Verbindung.

Bevorzugt sind die Verbundmittel Verbunddübel, vorzugsweise Kopfbolzendübel. Besonders bevorzugt sind die Verbundmittel Stahlverbundleisten. Ferner sollen noch weitere Verbundmittel möglich sein.

In einer weiteren bevorzugten Ausführungsform der Erfindung ragen Teile der Textilbewehrung an den Stirnseiten der Betonfertigteile heraus, um die Verbundmittel zu umgreifen.

Damit ist das Verbundbauteil auf einfache Weise herstellbar.

In einer weiteren Ausführungsform weisen die Betonfertigteile jeweils mindestens eine Aussparung für die Verbundmittel auf, die von einer Betonüberdeckung der Betonfertigteile überdeckt ist, wobei Teile der Textilbewehrung in die Aussparung ragen, um die Verbundmittel zu umgreifen.

Damit ist das Verbundbauteil mit einer Überdeckung der Verbundmittel auf einfache Weise herstellbar.

Bevorzugt ist eine Aussparung für die Verbundmittel so ausgelegt, dass sie sich nicht über die komplette Plattenhöhe der Betonfertigteile erstreckt, sondern durch eine ausreichende Betonüberdeckung von der Plattenoberseite abgedeckt ist. Besonders bevorzugt weist das Betonfertigteil einen auskragenden Bereich auf, um die Betonüberdeckung zu ermöglichen.

In einer weiteren Ausführungsform weist die Textilbewehrung
- Ausnehmungen für die Verbundmittel auf oder
- zusätzliche Textilfaserstrukturen auf, die in die Textilbewehrung zumindest teilweise eingelegt oder mit der Textilbewehrung zumindest teilweise verbunden sind.

Bevorzugt sind die in der Textilbewehrung vorgesehenen Ausnehmungen derart ausgestaltet, dass die maßgebende Abmessung des Verbundmittels durch diese Ausnehmungen führbar ist. Dabei ragen Teile der Textilbewehrung mit den Ausnehmungen aus dem Betonfertigteil heraus.

Bevorzugt sind die zusätzlichen Textilfaserstrukturen Strukturen, die zumindest teilweise in die Textilbewehrung eingelegt sind, wobei Teile der zusätzlichen Textilfaserstrukturen aus dem Betonfertigteil herausragen.

Bevorzugt sind die zusätzlichen Textilfaserstrukturen Strukturen, die zumindest teilweise mit der Textilbewehrung verbunden sind, wobei Teile der zusätzlichen Textilfaserstrukturen aus dem Betonfertigteil herausragen. Vorzugsweise erfolgt ein Verbinden mittels eines Verwebens, Annähens oder thermischen Verschweißens.

Bevorzugt weisen die zusätzlichen Textilfaserstrukturen eine 2D-oder 3D-Struktur auf.

Besonders bevorzugt ist die Textilbewehrung mit den zusätzlichen Textilfaserstrukturen damit eingerichtet, die Verbundmittel zu umschließen und zusätzliche Kräfte, vorzugsweise Schubkräfte, aus den Verbundmitteln aufzunehmen.

Besonders bevorzugt sind die Ausnehmungen in der Textilbewehrung und/oder die zusätzlichen Textilfaserstrukturen verstärkt. Vorzugsweise erfolgt eine Verstärkung mittels dickeren Fasern, einer Erhöhung der Faserdichte oder einem Verringern des Abstands zwischen nebeneinander liegenden Fasern. Besonders bevorzugt bestehen die zusätzlichen Textilfaserstrukturen aus Glasfasern, Carbonfasern, Aramidfasern oder Basaltfasern oder eine Mischung hiervon. Besonders bevorzugt sind die zusätzlichen Textilfaserstrukturen wie die Textilbewehrung herstellbar.

In einer weiteren bevorzugten Ausführungsform der Erfindung sind die zusätzlichen Textilfaserstrukturen als Schlaufen oder als mindestens ein Zugband ausgebildet.

Bevorzugt sind die Schlaufen U-förmig ausgebildet. Bevorzugt ist das Zugband mehrfach durch das Betonfertigteil geführt.

Gemäß einem weiteren Aspekt der Erfindung ist ein Verfahren zur Herstellung eines Betonfertigteils gemäß Anspruch 5 vorgesehen, umfassend die Schritte
- Anbringen der Textilbewehrung an Abstandhaltern, die an einer Schalung angeordnet sind,
- Einbringen von Frischbeton in die Schalung und zwischen die Textilbewehrung und Verdichten des Frischbetons,
- Aushärten des Frischbetons und
- Ausschalen des Fertigbetonteils.

Der Frischbeton weist eine Korngröße von mindestens 8,0 mm auf.

Gemäß einem weiteren Aspekt der Erfindung ist eine Verwendung einer Textilbewehrung in einem Verfahren zur Herstellung eines Betonfertigteils vorgesehen.

Weitere Vorteile und Einzelheiten der Erfindung werden anhand der in den Figuren dargestellten Ausführungsbeispiele erläutert.

Die Figuren zeigen im Einzelnen:
- Figur 1: eine perspektivische Darstellung eines erfindungsgemäßen flächigen Betonfertigteils,
- Figur 2: eine perspektivische Darstellung einer Textilbewehrung aus Figur 1,
- Figur 3: einen Schnitt durch das flächige Betonfertigteil aus Figur 1,
- Figur 4: eine perspektivische Darstellung einer Textilbewehrung mit verstärkter Bewehrung,
- Figur 5: einen Schnitt durch ein erfindungsgemäßes Deckenbetonfertigteil durch ein Auflager,
- Figur 6: einen Schnitt durch ein alternatives erfindungsgemäßes Deckenbetonfertigteil aus Figur 5,
- Figur 7a: einen Schnitt durch ein erfindungsgemäßes Deckenbetonfertigteil in Verbundbauweise,
- Figur 7b: einen Schnitt durch das erfindungsgemäße Deckenbetonfertigteil aus Figur 7a,
- Figur 8: einen Ausschnitt des Deckenbetonfertigteils aus den Figuren 7a und 7b in der Draufsicht,
- Figur 9: eine Darstellung eines Deckenfeldes mit einer Aufteilung von Auflagerträgern und erfindungsgemäßen Deckenbetonfertigteilen bei einem Parkhaus,
- Figur 10: ein einzelnes erfindungsgemäßes Deckenbetonfertigteil in einer Ausführung als Rechteckplatte,
- Figur 11: einen Längsstoß von zwei erfindungsgemäßen Deckenbetonfertigteilen,
- Figur 12: einen Schnitt durch ein alternatives erfindungsgemäßes Deckenbetonfertigteil aus Figur 7b,
- Figur 13: einen Ausschnitt des Deckenbetonfertigteils aus Figur 12,
- Figur 14: einen Schnitt durch ein weiteres alternatives erfindungsgemäßes Deckenbetonfertigteil aus Figur 7b und
- Figur 15: einen Ausschnitt des Deckenbetonfertigteils aus Figur 14.

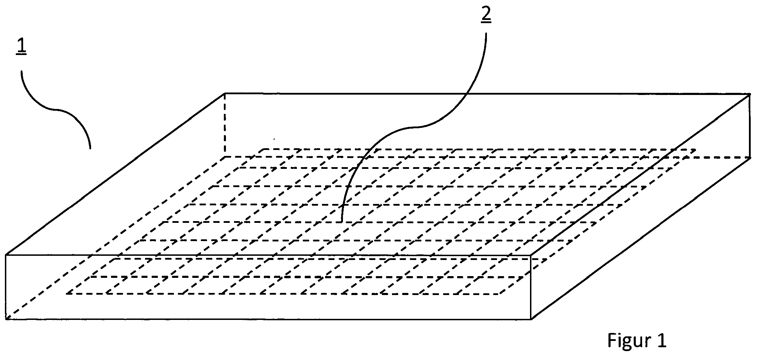

In Figur 1 ist eine perspektivische Darstellung eines erfindungsgemäßen flächigen/flächenartigen Betonfertigteils gezeichnet. In das Betonfertigteil 1 ist eine Textilbewehrung 2 (Hochleistungsbewehrung) eingebracht.

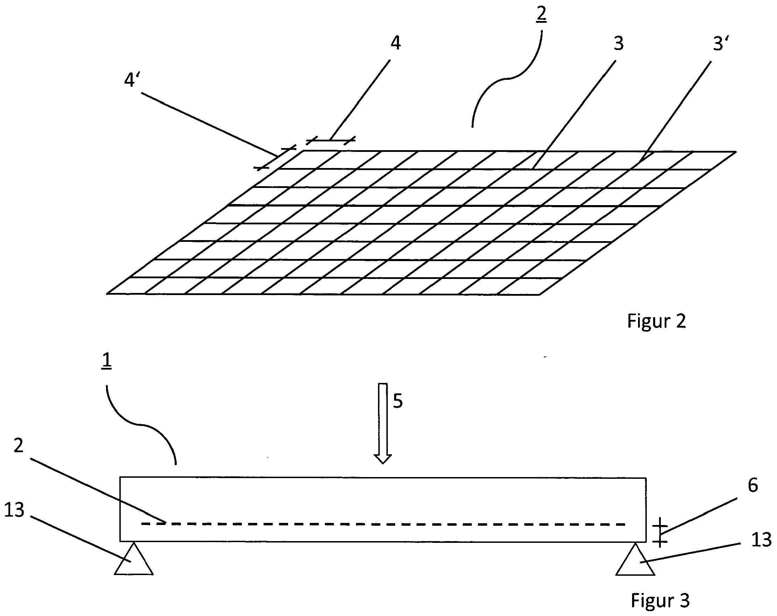

In Figur 2 ist eine perspektivische Darstellung einer Textilbewehrung aus Figur 1 gezeigt. Die Textilbewehrung 2 ist eine netzartige Hochleistungsbewehrung mit einer grobmaschigen Struktur. Die Textilbewehrung 2 weist eine Vielzahl rechteckiger Maschen mit einem lichten Abstand 4 und 4' in Längs- und in Querrichtung auf. Die Fasern weisen einen äquivalenten Faserdurchmesser von ca. 1,25 mm auf.

Die Textilbewehrung 2 besteht vorliegend aus Fasern 3 und 3', wie Glasfaser, Carbonfaser, Aramidfasern oder Basaltfasern, die an ihren Kreuzungspunkten miteinander verbunden sind.

Die Faser 3 ist eine Längsfaser und die Faser 3' ist eine Querfaser. Die Längsfasern 3 verlaufen in der Längsrichtung der Textilbewehrung 2 zueinander parallel. Die Querfasern 3' verlaufen in der Querrichtung der Textilbewehrung 2 zueinander parallel.

Figur 3 zeigt einen Schnitt durch das flächige Betonfertigteil aus Figur 1. Die Textilbewehrung 2 ist dabei im Bereich der auftretenden Zugkräfte im Betonfertigteil 1 (auf der Zugkraftseite) im Bauteil angeordnet. Vorliegend kann eine Krafteinwirkung, gemäß dem Pfeil 5, die auf das Bauteil von oben her einwirkt, derart abgetragen werden, indem die Textilbewehrung 2 die auftretenden Zugkräfte des Betonfertigteils 1 aufnimmt und an die Lager 13 abträgt.

Die Mindestbetondeckung 6 an der Zugkraftseite des Betonfertigteils 1 ist dabei mit einem Sicherheitsbeiwert derart bemessen, dass sie gewährleistet ist.

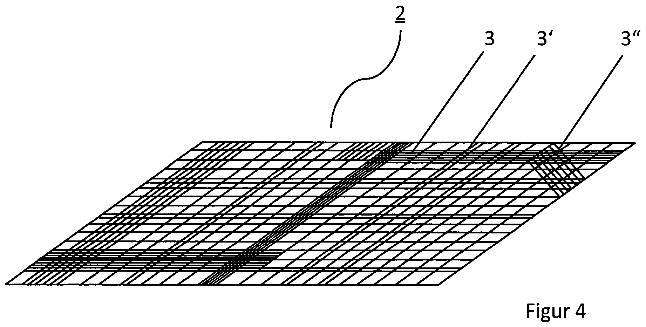

Figur 4 zeigt eine perspektivische Darstellung einer Textilbewehrung mit unterschiedlich verstärkter Bewehrung. Die Textilbewehrung 2 weist eine netzartige Hochleistungsbewehrung mit grobmaschigen Strukturen auf. Die Strukturen sind in die Textilbewehrung 2 eingewebt oder gelegt, wobei die Dichte der Fasern 3, 3' und 3" abschnittsweise in der Textilbewehrung 2 erhöht ist.

Die Textilbewehrung 2 weist neben Längsfasern 3 und Querfasern 3' auch schräg verlaufende Fasern 3" (Zulagen) auf. Die Fasern 3" verlaufen diagonal/schräg zu den Fasern 3 und 3'. Damit wird eine Textilbewehrung bereitgestellt, die einlagig ausgebildet ist und entsprechend dem inneren Kraftverlauf die äußere Krafteinwirkung abträgt.

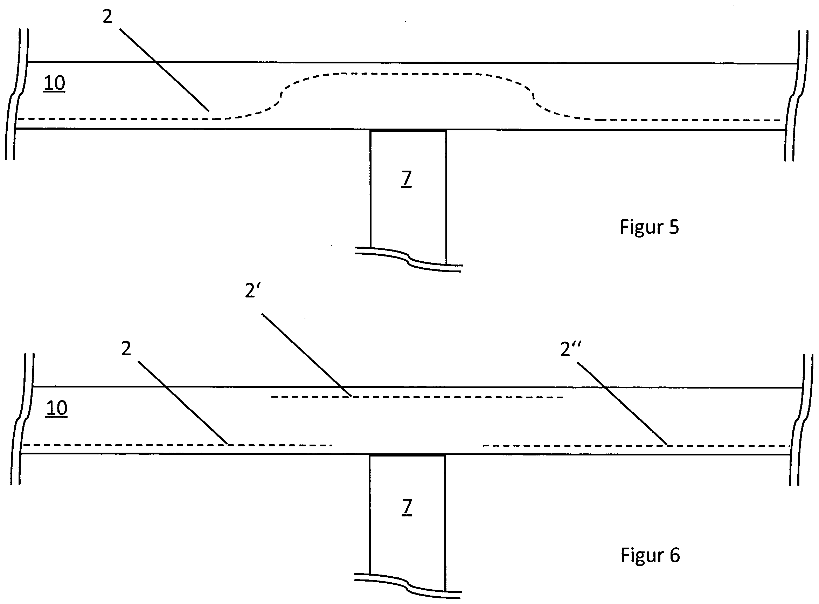

In Figur 5 ist ein Schnitt durch ein erfindungsgemäßes Deckenbetonfertigteil entlang einem Auflager dargestellt.

Aus äußeren Krafteinwirkungen (zum Beispiel: Einzellasten, Linienlasten, Flächenlasten oder andere Einwirkungen) resultierende innere Zugbeanspruchungen im Deckenbetonfertigteil werden durch die Textilbewehrung aufgenommen. Bevorzugt wird die Textilbewehrung 2 im Feld unten und im Bereich des Auflagers, hier einer Wand 7 (oder zum Beispiel auch Stütze oder Unterzug), wird die Textilbewehrung 2 im oberen Bereich des Deckenbetonfertigteils 10 geführt. Auftretende Querkräfte über dem Auflager können direkt an die Wand 7 abgetragen werden. Kräfte, die links und rechts vom Auflager einwirken und Momente, die an dem Auflager entstehen, sind durch die Textilbewehrung 2 ebenfalls aufnehmbar.

Die Textilbewehrung 2 beschreibt im Übergangsbereich vom Feld zur Stütze einen ansteigenden Verlauf, der zur anderen Seite der Stütze hin entsprechend wieder fällt. Hierbei kann auch ein linearer oder kurvenähnlicher Verlauf angenommen werden.

Figur 6 zeigt einen Schnitt durch ein alternatives erfindungsgemäßes Deckenbetonfertigteil aus Figur 5. Wie unter Figur 5 bereits erwähnt, werden auf das Deckenbetonfertigteil 10 einwirkende äußere Kräfte und die dadurch resultierenden inneren Zugbeanspruchungen im Deckenbetonfertigteil durch die Textilbewehrung aufgenommen.

Bevorzugt wird die Textilbewehrung 2 und 2" im Feld unten und im Bereich des Auflagers, hier einer Wand 7 (oder zum Beispiel auch Stütze oder Unterzug), wird die Textilbewehrung 2' im oberen Bereich des Deckenbetonfertigteils 10 geführt.

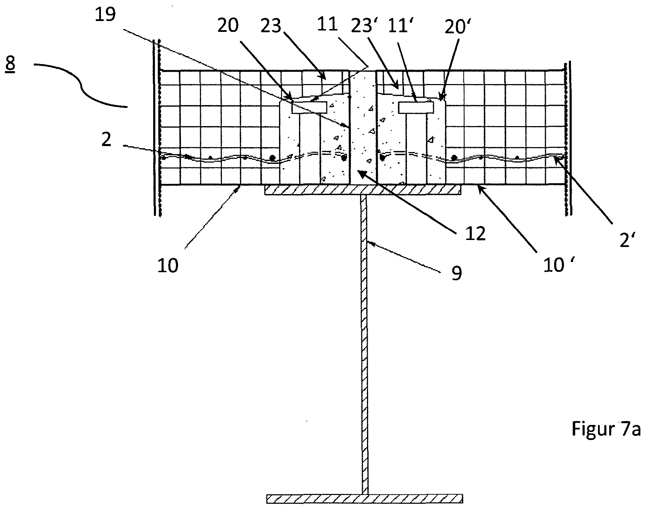

Figur 7a zeigt einen Schnitt durch ein erfindungsgemäßes Deckenbetonfertigteil in Verbundbauweise.

Das Verbundbauteil 8 weist einen als zum Beispiel Doppel-T-Träger ausgebildeten Stahlträger 9 auf. Die Verbundmittel 11, 11', die zum Beispiel als Kopfbolzendübel ausgebilded sind, sind auf der Oberseite eines Flansches (Obergurt) des Stahlträgers 9 angeordnet. Die Verbundmittel 11, 11' sind dabei fest mit dem oberen Flansch des Stahlträgers 9 verbunden. Vorliegend sind die Verbundmittel 11, 11' als Kopfbolzendübel ausgebildet. Andere Typen von Verbundmitteln sind ebenfalls denkbar.

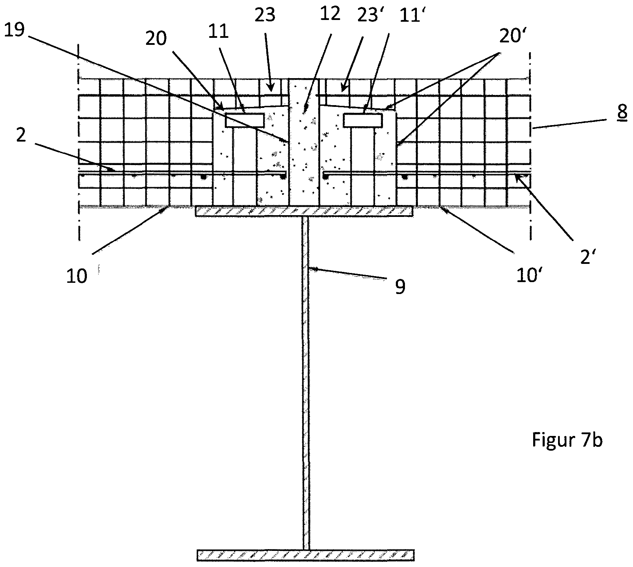

Die Deckenbetonfertigteile 10 und 10' weisen jeweils eine Textilbewehrung 2 und 2' auf, die entsprechend der Beanspruchung geradlinig (Figur 7b) oder kurvenförmig in den Deckenbetonfertigteilen 10 und 10' verlegt sind.

Die Deckenbetonfertigteile 10 und 10' nehmen die Textilbewehrung 2 und 2' auf. Die Deckenbetonfertigteile 10 und 10' sind auf dem Flansch des Stahltägers 9 derart aufgelagert, dass ihre Textilbewehrung 2 und 2' die Verbundmittel 11 und 11' umgreifen. Der kraftschlüssige Verbund zwischen den Deckenbetonfertigteilen 10 und 10' mit den Textilbewehrungen 2 und 2' und den Verbundmitteln 11 und 11'erfolgt durch einen nachträglichen Fugenverguss 12. Durch den kraftschlüssigen Verbund wird das Verbundbauteil 8 aktiviert. Als Material für den Fugenverguss 12 wird Vergussmörtel, Vergussbeton oder Vergusskleber verwendet.

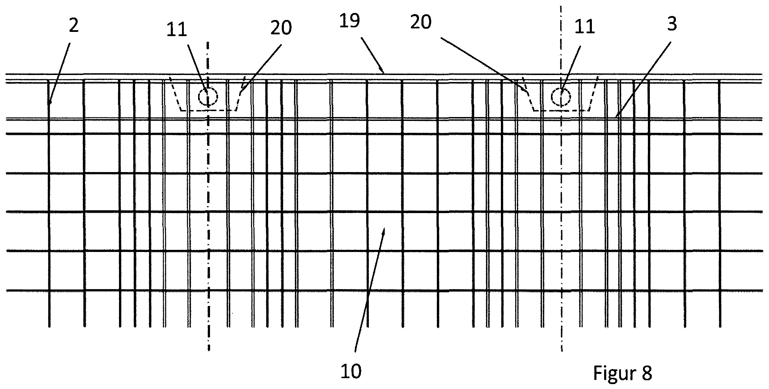

In Figur 8 ist ein Ausschnitt des Deckenbetonfertigteils aus den Figuren 7 a und 7b in der Draufsicht dargestellt.

Das Deckenbetonfertigteil 10 weist eine Textilbewehrung mit einer Vielzahl von Längsfasern 3 auf. In die Textilbewehrung 2 sind Strukturen eingewebt oder gelegt. Diese Strukturen sind zusätzliche vertikale Fasern, die beabstandet voneinander nebeneinander liegen. Damit wird eine Textilbewehrung 2 bereitgestellt, die einlagig derart ausgebildet ist, dass sie entsprechend einer äußeren Krafteinwirkung, die daraus resultierenden inneren Beanspruchungen aufnehmen kann.

In den Figuren 7a, 7b und 8 ist die Textilbewehrung 2 und 2' der Deckenbetonfertigteile 10 und 10' der Verbundkonstruktion 8 so eingerichtet, dass sie gerade nicht über die Kontur 19 des Deckenbetonfertigteils 10 und 10' hinausragt, aber die Verbundmittel 11 und 11' umschließt. In einer weiteren bevorzugten Ausführung ragt die Textilbewehrung über den Betonfertigteilrand heraus.

Ferner sind Aussparungen 20 und 20' für die Verbundmittel 11 und 11' vorgesehen. Die Aussparungen 20 und 20' erstrecken sich nicht über die komplette Plattenhöhe der Deckenbetonfertigteile 10 und 10', sondern sind durch eine ausreichende Betonüberdeckung 23 und 23' von der Plattenoberseite abgedeckt. Dabei weisen die Deckenbetonfertigteile 10 und 10' einen auskragenden Bereich auf, um die Betonüberdeckung 23 und 23' zu ermöglichen, wie in den Figuren 7a und 7b gezeigt.

In den Textilbewehrungen 2 und 2' sind Ausnehmungen vorgesehen, die derart ausgestaltet sind, dass ein Kopf der Verbundmittel 11 und 11' durch eine der Ausnehmungen passt.

Außerdem weisen die Textilbewehrungen 2 und 2' eine Textilfaserstruktur mit verstärkten Fasern in unmittelbarer Nähe der Verbundmittel 11 und 11' auf, um zusätzliche Kräfte aus den Verbundmitteln 11 und 11' aufzunehmen.

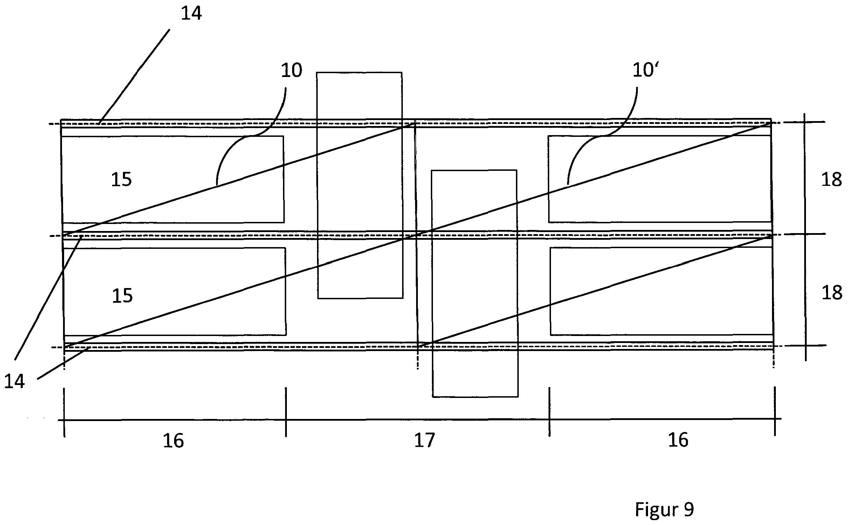

Figur 9 zeigt eine Darstellung eines Deckenfeldes mit einer Aufteilung von Auflagerträgern und erfindungsgemäßen Deckenbetonfertigteilen bei einem Parkhaus.

Die Deckenbetonfertigteile (Deckenplatten) 10 und 10' werden als Betonfertigteile mit eingelegter Textilbewehrung hergestellt. Dabei werden vorzugsweise jeweils zwei Deckenbetonfertigteile 10 und 10' längs hintereinander auf jeder Seite der Auflagerträger 14 verlegt. An den Gebäudeaußenachsen liegen sie nur einseitig auf einem Auflagerträger 14 auf.

Die Auflagerträger 14 und die Deckenbetonfertigteile 10 und 10' werden schubfest miteinander verbunden. Vorzugsweise werden durch Verbundmittel auf den Auflagerträgern 14, die in Aussparungen der Deckenbetonfertigteile 10 und 10' liegen und über die, nach einem Fugenverguss, die Schubkräfte übertragen, die durch die gemeinsame Tragwirkung zwischen Deckenbetonfertigteile 10 und 10' und Auflagerträger 14 entstehen.

Fig. 9 zeigt vier Stellplätze für Fahrzeuge 15, wobei die Stellplätze durch ihre Stellplatzlängen 16 und Stellplatzbreiten 18 sowie eine Fahrgasse 17 begrenzt sind.

Eine erfindungsgemäße Anwendung des hochleistungsbewehrten Betons ist die Herstellung von Deckenbetonfertigteilen 10 und 10' für Parkhäuser. Hierbei kommt der Vorteil einer Textilbewehrung voll zur Geltung. Der Schutz einer Stahlbewehrung in üblichen Betonbauteilen kann nur durch eine große Betondeckung und damit durch eine größere Bauteildicke und durch den zusätzlichen Schutz mit einer Betonbeschichtung gewährleistet werden. Betonflächen in Parkhäusern sind, wie keine anderen Betonoberflächen durch die Einwirkung von Tausalzen (Chloriden) belastet.

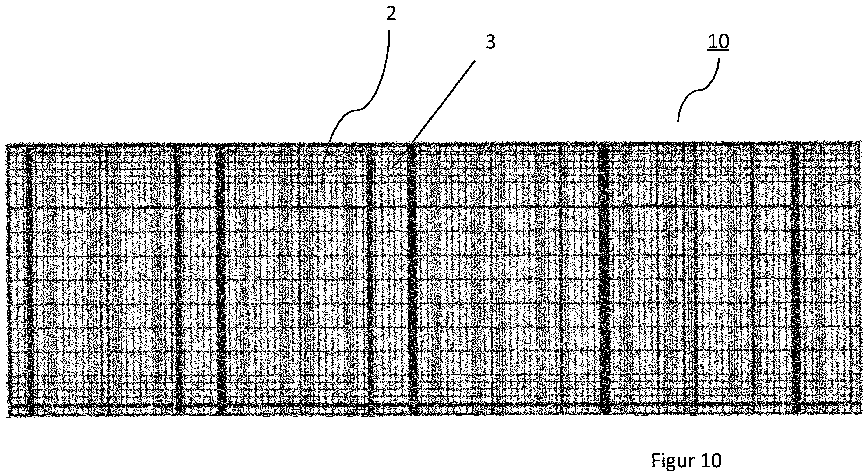

Figur 10 zeigt ein einzelnes erfindungsgemäßes Deckenbetonfertigteil in einer Ausführung als Rechteckplatte.

Das Deckenbetonfertigteil 10 ist in der bevorzugten Ausführung als Rechteckplatte ausgestaltet. Das Deckenbetonfertigteil 10 kann zum Beispiel bei polygonal verlaufendem Grundriss auch trapezförmig sein.

Bei einer rechteckigen Plattenkontur verlaufen die Fasern 3 und 3' der Textilbewehrung 2 vorzugsweise orthogonal zu den Rändern das Deckenbetonfertigteil 10, die auf den Auflagerträgern aufgelegt werden (nicht dargestellt). Im Bereich von Verbundelementen kann die Anordnung der Fasern 3 und 3' verstärkt werden, um die zusätzlichen Kräfte aus der schubfesten Verbindung mit dem Auflagerträger aufzunehmen.

Diese Verstärkungen können sowohl durch eine geringere Beabstandung der Fasern 3 und 3', durch das Einfügen von dickeren Fasern, durch das Einfügen von schräg verlaufenden Fasern oder eine beliebige Kombination dieser Maßnahmen sein.

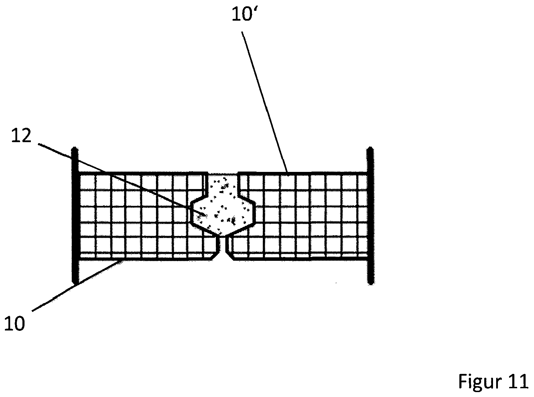

Figur 11 zeigt einen Längsstoß von zwei erfindungsgemäßen Deckenbetonfertigteilen.

Der Längsstoß von zwei Deckenbetonfertigteilen 10 und 10' wird durch eine Fugenausbildung erzielt, bei der durch die Randkontur der Deckenbetonfertigteile 10 und 10' und den Fugenverguss 12 eine Schubübertragung zwischen den benachbarten Plattenrändern erfolgt, sodass es zu keiner unterschiedlichen Verformung der Deckenbetonfertigteile 10 und 10' kommen kann, wenn die Deckenbetonfertigteile 10 und 10' unterschiedlich belastet werden.

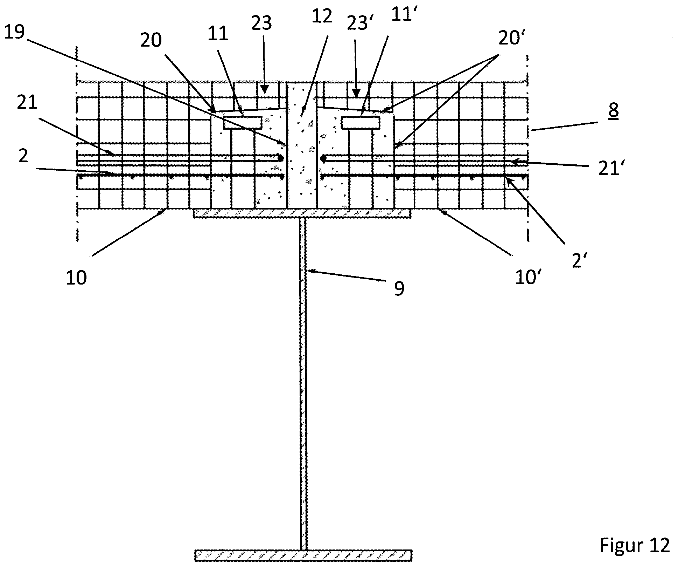

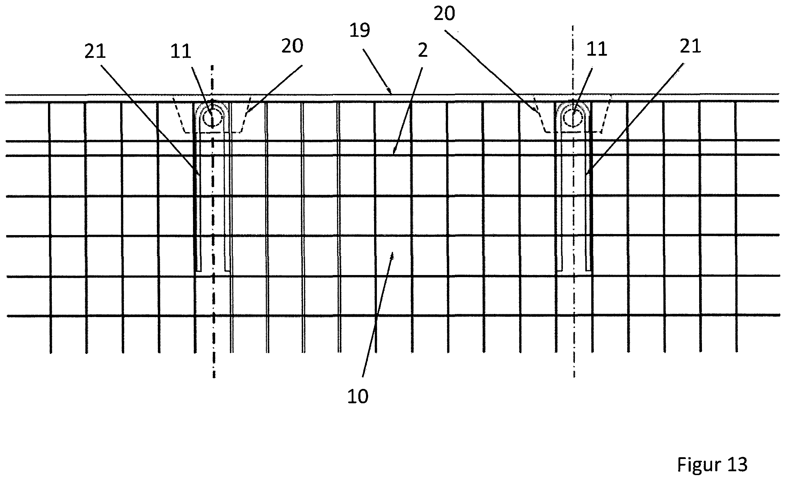

Figur 12 zeigt einen Schnitt durch ein alternatives erfindungsgemäßes Deckenbetonfertigteil aus Figur 7b und Figur 13 zeigt einen Ausschnitt des Deckenbetonfertigteils aus Figur 12.

Im Unterscheid zur Figur 7b sind zusätzliche Textilfaserstrukturen 21 und 21' vorgesehen.

Die Textilbewehrungen 2 und 2' weisen die zusätzlichen Textilfaserstrukturen 21 und 21' auf, die in die Textilbewehrungen 2 und 2' zumindest teilweise eingelegt sind. Eine feste Verbindung der Textilbewehrungen 2 und 2' mit den Textilfaserstrukturen 21 und 21' ist nicht gegeben. Die Textilfaserstrukturen 21 und 21' bestehen aus einem verstärkten textilen Gewebe, das die Zugkräfte aus der Plattenbelastung aufnehmen kann. Die Kräfte aus den Verbundmitteln 11 und 11' werden durch die eingelegten Textilfaserstrukturen 21 und 21', bevorzugt U-förmige Schlaufen, aufgenommen, die ihrerseits die Verbundmittel 11 und 11' umschließen.

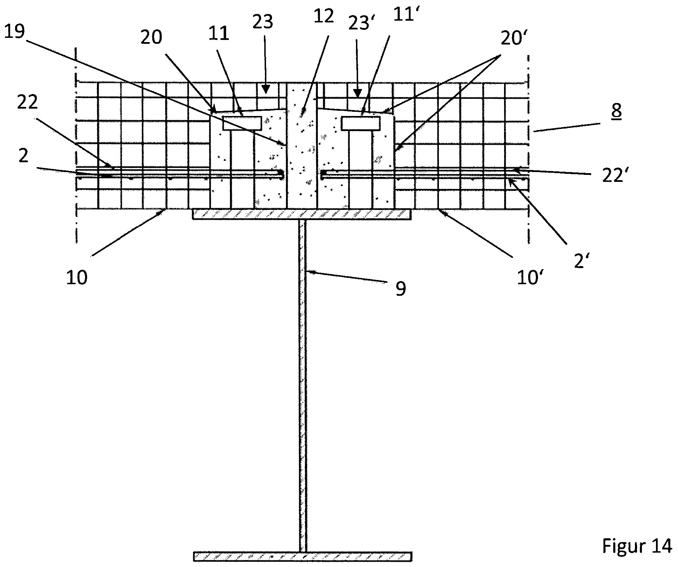

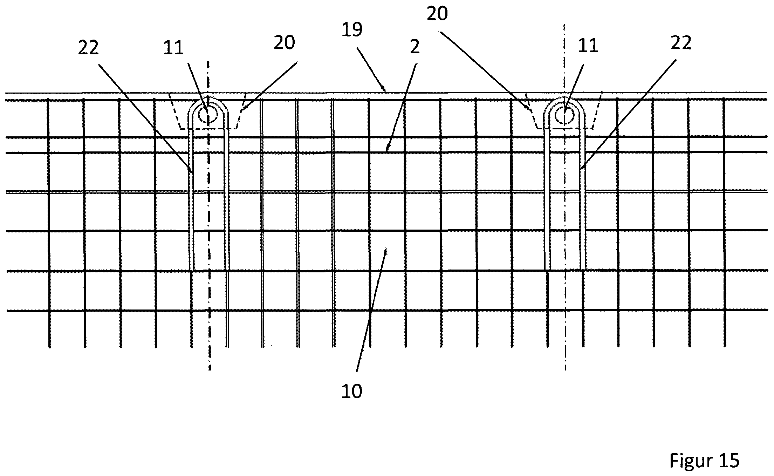

Figur 14 zeigt einen Schnitt durch ein weiteres alternatives erfindungsgemäßes Deckenbetonfertigteil aus Figur 7b und Figur 15 zeigt einen Ausschnitt des Deckenbetonfertigteils aus Figur 14.

Im Unterscheid zur Figur 7b sind zusätzliche Textilfaserstrukturen 22 und 22' vorgesehen.

Die Textilbewehrungen 2 und 2' weisen zusätzliche mit den Textilbewehrungen 2 und 2' verbundene Textilfaserstrukturen 22 und 22' auf, die mit den Textilbewehrungen 2 und 2' zumindest teilweise verbunden sind. Die Textilfaserstrukturen 22 und 22' bestehen aus einem verstärkten textilen Gewebe, das die Zugkräfte aus der Plattenbelastung aufnehmen kann. Die Kräfte aus den Verbundmitteln 11 und 11' werden durch die verwobenen Textilfaserstrukturen 22 und 22', bevorzugt U-förmige Schlaufen, aufgenommen, die ihrerseits die Verbundmittel 11 und 11' umschließen.

Mit der vorliegenden Erfindung wird ein hochleistungsbewehrtes Betonfertigteil geschaffen, bei dem, durch die Verwendung von Textilbewehrungen, die Verwendung eines Betons nach DIN EN 206 ermöglicht wird. Ein Entmischen des Betons durch eine engmaschige Struktur der Textilbewehrung ist ausgeschlossen. Chlorid- und/oder carbonathaltige Umgebungsbedingungen haben keinen schädlichen Einfluss auf den mit Textilbewehrung bewehrten Hochleistungsbeton im Sinne dieser Erfindung.

### Bezugszeichenliste

- 1: Betonfertigteil
- 2: Textilbewehrung
- 2': Textilbewehrung
- 2": Textilbewehrung
- 3: Faser
- 3': Faser
- 3": schräg verlaufende Faser
- 4: Abstand in Längsrichtung
- 4': Abstand in Querrichtung
- 5: Krafteinwirkung
- 6: Mindestbetondeckung
- 7: unterstützendes Bauteil
- 8: Verbundbauteil
- 9: Stahlträger
- 10: Deckenbetonfertigteil
- 10': Deckenbetonfertigteil
- 11: Verbundmittel
- 11': Verbundmittel
- 12: Fugenverguss
- 13: Auflager
- 14: Auflagerträger
- 15: Fahrzeug
- 16: Stellplatzlänge
- 17: Fahrgasse
- 18: Stellplatzbreite
- 19: Kontur des Deckenbetonfertigteils
- 20: Aussparung
- 20': Aussparung
- 21: zusätzliche Textilfaserstruktur
- 21': zusätzliche Textilfaserstruktur
- 22: zusätzliche Textilfaserstruktur
- 22': zusätzliche Textilfaserstruktur
- 23: Betonüberdeckung
- 23': Betonüberdeckung

## Patentansprüche

1. Flächiges Betonfertigteil (1)
- umfassend mindestens eine Textilbewehrung (2),
- wobei die Textilbewehrung (2) eine erste Anzahl von Fasern (3) aufweist, die in eine Richtung orientiert sind und eine zweite Anzahl von Fasern (3') aufweist, die in eine zweite Richtung orientiert sind,
- wobei die erste Anzahl von Fasern Längsfasern (3) und die zweite Anzahl von Fasern Querfasern (3') sind, wobei die Längsfasern (3) zu den Querfasern (3') in einer Draufsicht auf die Textilbewehrung (2) orthogonal verlaufen,
- wobei die Textilbewehrung (2) im zugbeanspruchten Bereich des Betonfertigteils (1) geführt ist,
- wobei die Textilbewehrung (2) die auf das Betonfertigteil (1) einwirkenden Zugkräfte vollständig abträgt,
- wobei die Textilbewehrung (2) Carbonfasern (3, 3', 3") aufweist,
- wobei die Fasern eine Beschichtung aufweisen, wobei die Beschichtung ein Epoxidharz ist, und
- wobei die Textilbewehrung (2) einlagig ausgebildet ist,
**dadurch gekennzeichnet,**
- **dass** das Größtkorn des Betons des Betonfertigteils (1) eine Größe von mindestens 8,0 mm aufweist,
- **dass** die Textilbewehrung (2) zusätzliche Fasern (3") aufweist, die ausgehend von einer Krafteinwirkung auf das Betonfertigteil (1) entsprechend orientiert sind und
- **dass** die zusätzlichen Fasern (3") schräg verlaufende Fasern sind und die schräg verlaufenden Fasern einen Winkel gegenüber den Längsfasern (3) und den Querfasern (3') aufweisen.

2. Flächiges Betonfertigteil (1) gemäß Anspruch 1, wobei die Fasern (3, 3', 3") der Textilbewehrung (2) verwoben oder gelegt sind.

3. Flächiges Betonfertigteil (1) gemäß einem der vorherigen Ansprüche, wobei in die Textilbewehrung (2) Strukturen eingewebt oder gelegt sind.

4. Flächiges Betonfertigteil (1) gemäß einem der vorherigen Ansprüche, wobei die Textilbewehrung (2) variabel in der Querschnittshöhe des Betonfertigteils (1) im Betonfertigteil (1) verlegt wird.

5. Verfahren zur Herstellung eines flächiges Betonfertigteils (1) gemäß einem der Ansprüche 1 bis 4, umfassend die Schritte
- Anbringen der Textilbewehrung (2) an Abstandhaltern, die an einer Schalung angeordnet sind,
- Einbringen von Frischbeton in die Schalung und zwischen die Textilbewehrung (2) und Verdichten des Frischbetons,
- Aushärten des Frischbetons und
- Ausschalen des Fertigbetonteils (1).

## Claims

1. Planar precast concrete part (1)
- comprising at least one textile reinforcement (2),
- wherein the textile reinforcement (2) comprises a first number of fibres (3) oriented in one direction and a second number of fibres (3') oriented in a second direction,
- the first number of fibres being longitudinal fibres (3) and the second number of fibres being transverse fibres (3'), the longitudinal fibres (3) are orthogonal to the transverse fibres (3') in a plan view of the textile reinforcement (2),
- wherein the textile reinforcement (2) is guided in the tensile stressed area of the precast concrete part (1),
- wherein the textile reinforcement (2) completely carries away the tensile forces acting on the precast concrete part (1),
- wherein the textile reinforcement (2) comprises carbon fibres (3, 3', 3"),
- wherein the fibres have a coating, the coating being an epoxy resin, and
- wherein the textile reinforcement (2) is formed in a single layer,
**characterised in that**
- the maximum grain size of the concrete of the precast concrete part (1) has a size of at least 8.0 mm,
- the textile reinforcement (2) has additional fibres (3") which are oriented according to the action of a force on the precast concrete part (1), and
- the additional fibres (3") are oblique fibres and the oblique fibres have an angle with respect to the longitudinal fibres (3) and the transverse fibres (3').

2. Planar precast concrete element (1) according to claim 1, wherein the fibres (3, 3', 3") of the textile reinforcement (2) are interwoven or laid.

3. Planar precast concrete element (1) according to one of the previous claims, wherein structures are woven or laid into the textile reinforcement (2).

4. Planar precast concrete element (1) according to one of the previous claims, wherein the textile reinforcement (2) is laid variably in the cross-sectional height of the precast concrete element (1) in the precast concrete element (1).

5. A method of manufacturing a planar precast concrete element (1) according to any one of claims 1 to 4, comprising the steps of
- attaching the textile reinforcement (2) to spacers arranged on a formwork,
- pacing fresh concrete in the formwork and between the textile reinforcement (2) and compacting the fresh concrete,
- curing the fresh concrete and
- stripping the precast concrete part (1).

## Revendications

1. Elément préfabriqué plat en béton (1)
- comprenant au moins une armature textile (2),
- dans lequel l'armature textile (2) comprend un premier nombre de fibres (3) orientées dans une direction et un second nombre de fibres (3') orientées dans une seconde direction,
- le premier nombre de fibres étant des fibres longitudinales (3) et le deuxième nombre de fibres étant des fibres transversales (3'), les fibres longitudinales (3) étant orthogonales aux fibres transversales (3') dans une vue en plan de l'armature textile (2),
- l'armature textile (2) étant guidée dans la zone sollicitée en traction de l'élément préfabriqué en béton (1),
- l'armature textile (2) supportant entièrement les forces de traction agissant sur l'élément préfabriqué en béton (1),
- dans lequel l'armature textile (2) comprend des fibres de carbone (3, 3', 3"),
- lesdites fibres ayant un revêtement, ledit revêtement étant une résine époxy, et
- l'armature textile (2) étant réalisée en une seule couche,
**caractérisé en ce que**
- **en ce que** le grain le plus grand du béton de l'élément préfabriqué en béton (1) présente une taille d'au moins 8,0 mm,
- **en ce que** l'armature textile (2) présente des fibres supplémentaires (3") qui sont orientées de manière correspondante à partir d'une action de force sur l'élément préfabriqué en béton (1) et
- **en ce que** les fibres supplémentaires (3") sont des fibres obliques et
les fibres obliques présentent un angle par rapport aux fibres longitudinales (3) et aux fibres transversales (3').

2. Elément préfabriqué plat en béton (1) selon la revendication 1, dans lequel les fibres (3, 3', 3") de l'armature textile (2) sont tissées ou posées.

3. Elément préfabriqué plat en béton (1) selon l'une des revendications précédentes, dans lequel des structures sont tissées ou posées dans l'armature textile (2).

4. Elément préfabriqué plat en béton (1) selon l'une des revendications précédentes, dans lequel l'armature textile (2) est posée de manière variable dans la hauteur de la section transversale de l'élément préfabriqué en béton (1) dans l'élément préfabriqué en béton (1).

5. Procédé de fabrication d'un élément préfabriqué plat en béton (1) selon l'une des revendications 1 à 4, comprenant les étapes suivantes
- Mise en place de l'armature textile (2) sur des entretoises disposées sur un coffrage,
- Mise en place de béton frais dans le coffrage et entre les armatures textiles (2) et compactage du béton frais,
- le durcissement du béton frais et
- Décoffrage de l'élément en béton préfabriqué (1).
